**Europäisches Patentamt**

**European Patent Office**

**Office européen des brevets**

(11) Numéro de publication: **0 034 079
B1**

(12) **FASCICULE DE BREVET EUROPEEN**

(45) Date de publication du fascicule du brevet:
06.07.83

(21) Numéro de dépôt: **81400105.3**

(22) Date de dépôt: **26.01.81**

(51) Int. Cl.³: **F 15 D 1/02, F 16 L 55/00**

(54) Procédé et dispositif pour stabiliser l'écoulement d'un mélange diphasique.

(30) Priorité: **30.01.80 FR 8002054**

(43) Date de publication de la demande:
**19.08.81 Bulletin 81/33**

(45) Mention de la délivrance du brevet:
**06.07.83 Bulletin 83/27**

(84) Etats contractants désignés:
**BE DE GB IT NL SE**

(56) Documents cités:
**FR-A-2 128 861
FR-A-2 222 560
FR-A-2 271 492
US-A-1 974 110
US-A-3 841 568**

(73) Titulaire: **INSTITUT FRANCAIS DU PETROLE, 4, Avenue de Bois-Préau, F-92502 Rueil-Malmaison (FR)**

(72) Inventeur: **Arnaudeau, Marcel, 32, rue Boursault, F-75017 Paris (FR)**
Inventeur: **Corteville, Jacques, 23, rue des Platanes, F-92500 Rueil-Malmaison (FR)**

BUNDESDRUCKEREI BERLIN

Procédé et dispositif pour stabiliser l'écoulement d'un mélange diphasique

La présente invention concerne une méthode et un dispositif pour stabiliser l'écoulement d'un fluide diphasique et plus particulièrement pour rendre plus homogène le mélange de gaz et de liquide composant ce fluide.

Des dispositifs permettant de modifier localement l'écoulement d'un liquide sont connus de l'art antérieur et par exemple décrits dans les brevets US 1 974 110, 3 841 568 et Français 2 128 861, 2 222 560 et 2 271 492. Ces dispositifs utilisés à poste fixe dans les écoulements de liquides ont pour but de stabiliser l'écoulement, de modifier les turbulences, etc.

Le problème à résoudre est lié aux écoulements diphasiques, c'est-à-dire à l'écoulement d'un fluide dont une fraction est à l'état liquide et la fraction restante à l'état gazeux.

Ainsi, le pompage de fluides diphasiques, tels que, par exemple, des effluents pétroliers, est assuré par des matériels de pompage classiques tant que le rapport volumétrique du gaz au liquide n'excède pas une valeur limite voisine de 0,1 à 0,2, ou par des matériels conçus spécialement lorsque le rapport volumétrique est supérieur à cette limite.

Le fonctionnement de ces appareils est satisfaisant tant que le mélange gaz-liquide présente une certaine homogénéité et qu'une fraction importante de gaz ne s'accumule pas localement pour former des »bouchons de gaz« dans l'écoulement du fluide diphasique.

La présente invention propose un procédé pour stabiliser l'écoulement d'un mélange diphasique gaz-liquide dans une conduite et réduire ainsi, notamment la formation de bouchons de gaz dans cet écoulement, pendant que l'on introduit dans la conduite au moins un organe adapté à fractionner l'écoulement diphasique en une pluralité d'écoulements séparés et à les recombiner en formant un écoulement sensiblement homogène en aval dudit organe, caractérisé en ce qu'on déplace cet organe dans la conduite jusqu'à l'emplacement de celle-ci pour lequel on observe la meilleure stabilisation possible de l'écoulement, et en ce qu'on l'immobilise audit emplacement.

En outre, l'invention propose un dispositif pour stabiliser l'écoulement d'un mélange diphasique gaz-liquide dans une conduite et réduire ainsi, notamment la formation de bouchons de gaz dans cet écoulement, ce dispositif comportant au moins un organe adapté à fractionner l'écoulement diphasique en une pluralité d'écoulements séparés qui se recombinent en formant un écoulement sensiblement homogène en aval dudit organs, caractérisé en ce que ledit organe est amovible à l'intérieur de la conduite et comporte des moyens permettant son immobilisation à un emplacement de la conduite choisi à l'avance.

Cette méthode et ce dispositif permettant d'assurer une bonne homogénéisation du mélange gaz-liquide empêchant ainsi la formation de bouchons de gaz et/ou assurant leur disparition lorsqu'il en existe dans l'écoulement d'un fluide diphasique.

L'invention pourra être bien comprise et tous ses avantages apparaîtront à la lecture de la description qui suit illustrée par les dessins parmi lesquels:

— la figure 1 montre schématiquement un dispositif selon l'invention,

— la figure 2 représente plusieurs éléments composant le dispositif,

— les figures 3 à 8 illustrent différents modes de réalisation des éléments,

— les figures 9 et 10 montrent deux cas d'utilisation du dispositif selon l'invention.

On se réfère dans la suite, mais sans que cela soit limitatif, à un écoulement diphasique d'effluents pétroliers.

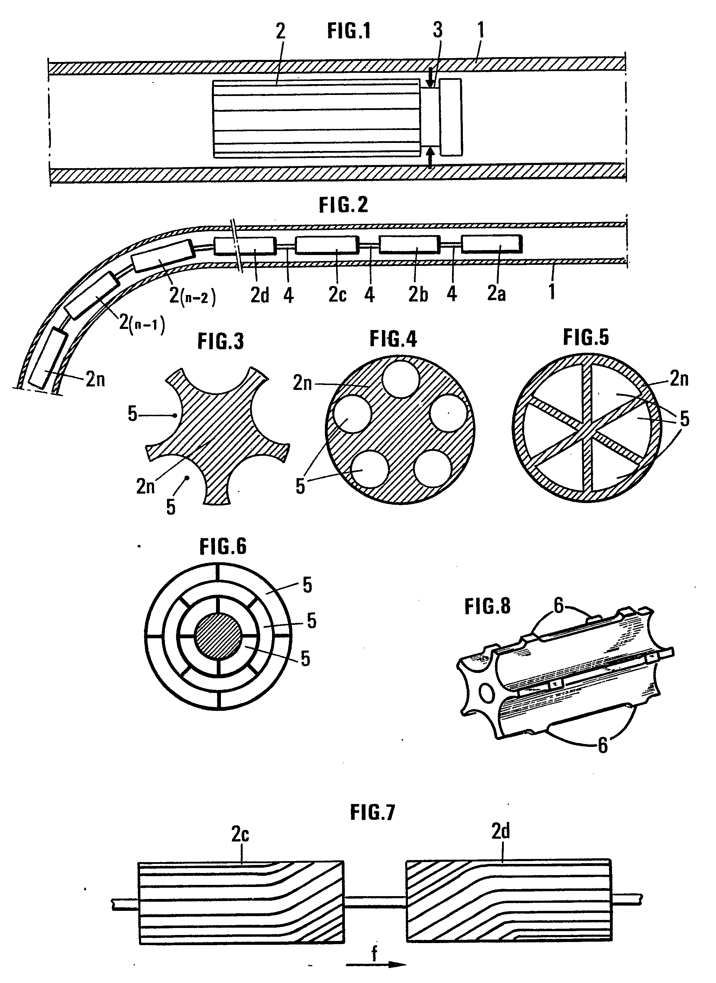

La figure 1 montre schématiquement le principe de l'invention qui consiste à positionner, dans un conduit 1, parcouru par un fluide diphasique, un organe 2 adapté à rendre plus homogène le mélange de gaz et de liquide. Cet organe 2 est maintenu dans le conduit 1 par des moyens d'immobilisation schématisés en 3.

L'organe 2 est déplaçable dans le conduit 1, pour être localisé à l'endroit le mieux approprié de l'écoulement diphasique.

Le déplacement de l'organe 2 peut être assuré par tout moyen connu tel que tige de manoeuvre, dispositif d'entraînement circulant dans un conduit sous l'action d'un fluide sous pression.

La figure 2 montre schématiquement un organe 2 composé de n éléments 2a, 2b, ... 2n fixés bout à bout par des moyens de raccordement articulés 4 permettant une rotation relative des éléments successifs les uns par rapport aux autres. De cette façon, l'organe 2 peut être déplacé dans la conduite 1 même si celle-ci présente des portions coudées.

Ces moyens de raccordement peuvent être constitués de rotules, de cardans à rotules, ou de tout autre dispositif connu du technicien. Pour cette raison, il n'est pas nécessaire d'illustrer en détail les modes de réalisation de ces moyens de raccordement.

La longueur de chaque élément composant l'organe 2 est choisie en fonction du plus petit rayon de courbure de la conduite 1.

Chaque élément 2a, 2b, ... 2n est adapté à fractionner l'écoulement diphasique en une pluralité d'écoulements séparés et à les recombiner en aval, en considérant le sens d'écoulement du fluide.

Dans ce but, les éléments 2a, 2b, ... 2n sont constitués d'un barreau de forme générale cylindrique dans lequel sont ménagés des conduits 5 axiaux ou hélicoidaux. Ces conduits 5 peuvent avoir, en section droite, diverses formes dont quelques unes ont été représentées sur les figures 3 à 6:

— section en portion de cercle, ouverte à la périphérie du barreau 2n (fig. 3),
— section circulaire (fig. 4),
— section triangulaire (fig. 5),
— section en forme de secteur d'anneau (fig. 6).

Selon une variante de réalisation illustrée par la figure 7, les conduits 5 de deux éléments consécutifs peuvent être appariés: en considérant le sens d'écoulement du fluids représenté par la flèche f, les conduits 5 du premier élément sont tout d'abord axiaux sur une première portion puis hélicoïdaux sur une seconde portion, tandis que les canaux de l'élément suivant sont tout d'abord hélicoïdaux puis axiaux. De préférence, mais non limitativement, les parties hélicoïdales auront une longueur voisine du demi pas de l'hélice.

Les éléments 2a, 2b, ... 2n sont constitués en un matériau compatible avec l'écoulement de fluide dans lequel ils sont placés. Le choix du matériau sera donc effectué par le technicien parmi les métaux, les matières plastiques armées ou non armées, etc.

Le centrage approximatif de chaque élément dans la conduite est assuré de façon connue en soi par des centreurs tels que des bossages 6 portés par chaque élément (figure 8). Comme il est bien connu des spécialistes, les dimensions et l'écartement entre les bossages centreurs sont déterminés en fonction du diamètre intérieur et du rayon de courbure minimal de la conduite pour assurer une circulation aisée de ces éléments dans toutes les portions de la conduite.

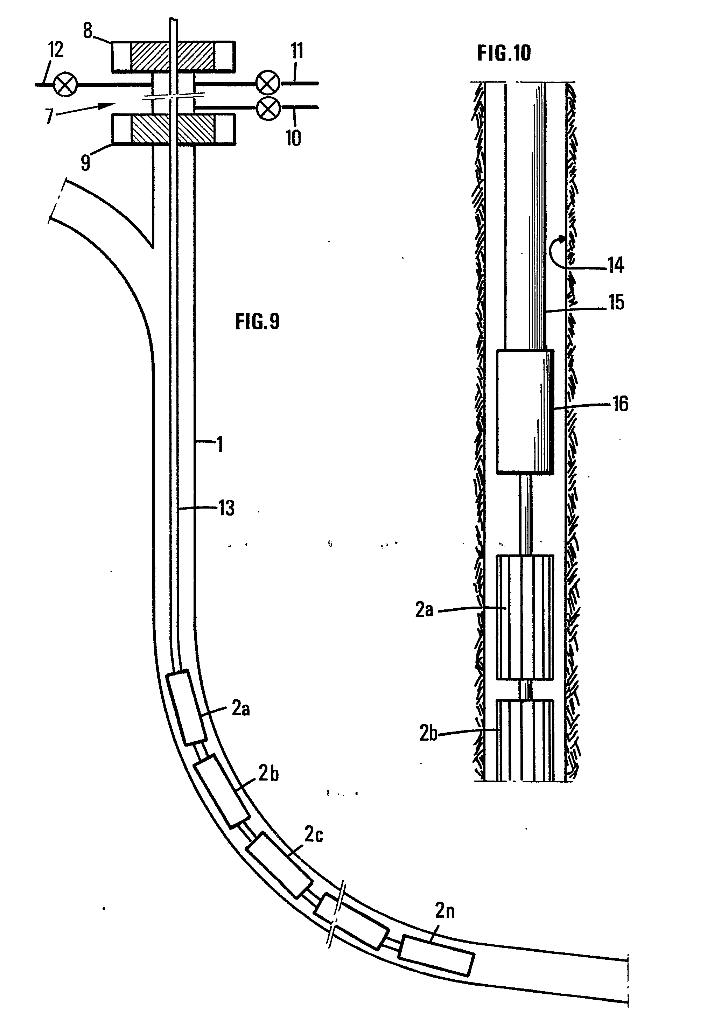

L'introduction du dispositif dans un conduit où circule un fluide sous pression, peut être effectuée au moyen d'un sas 7 d'introduction, comme schématisé sur la figure 9. Ce sas est pourvu de blocs d'obturation 8 et 9, de canalisations de purge 10 et 11 et d'une canalisation de mise en pression 12.

Dans le cas illustré par la figure 9, le dispositif 2 est fixé à l'extrémité d'une tige de manoeuvre 13 qui sert à sa mise en place et à son maintien dans la portion désirée de la canalisation 1, qui est par exemple ici une canalisation pour le transport d'effluents pétroliers.

L'endroit où doit être positionné le dispositif selon l'invention peut être déterminé en tenant compte des changements dans les conditions de pompage et/ou des fluctuations de pression en amont et en aval du dispositif lorsqu'on fait varier la position de celui-ci. On maintient alors le dispositif dans la position où ces conditions sont optimales, c'est-à-dire pour lesquelles l'écoulement est le plus stable.

C'est ainsi par exemple que, lorsque se forment des »bouchons« ou accumulations de gaz trop importants qui réduisent notablement le débit de pompage ou empêchent même tout pompage, on introduit le dispositif selon l'invention en amont de l'organe de pompage et on le déplace dans la canalisation jusqu'à ce qu'il atteigne une position pour laquelle on obtient sensiblement le maximum du débit de pompage dans des conditions stables. On maintient alors le dispositif dans cette position.

Dans le cas représenté par la figure 10, le dispositif 2 est maintenu dans un puits de production 14 en étant fixé à l'extrémité d'un groupe moto-pompe 16 suspendu à un tubage de production 15.

Les moyens d'immobilisation peuvent également être composés de dispositifs commercialisés par exemple par la société OTIS et comportant généralement un ou plusieurs manchons de retenue intégrés de préférence dans des portions rectilignes de la conduite 1 coopérant avec un mandrin d'accrochage muni de doigts escamotables adaptés à pénétrer dans des rainures du manchon de retenue. Ce mandrin, qui est solidaire du dispositif 2, permet d'immobiliser celui-ci à l'endroit désiré de la conduite. Eventuellement, des moyens de repêchage appropriés permettent de désolidariser le mandrin d'accrochage du manchon de retenue. De tels organes sont bien connus du technicien et ne seront donc pas décrits en détail.

De tels dispositifs sont, par exemple, décrits dans le catalogue OTIS de 1976, page 19 pour les manchon de retenue désignés sous le nom de »Landing neeple« et page 43 pour le mandrin désigné sous le nom de »Pumpdown Lock Mandrel«.

Des dispositifs semblables commercialisés par d'autres fabricants peuvent être utilisée.

On connaît suffisamment à l'heure actuelle le comportement des écoulements diphasiques dans les conduits pour déterminer avec une bonne approximation les endoits du conduit où apparaîtront les instabilités de l'écoulement, en fonction des paramètres hydro-dynamiques de l'écoulement et des caractéristiques géométriques des conduits. De cette façon lors de la fabrication des conduits on peut prévoir l'implantation de plusieurs manchons de géométries internes différentes, adaptés à permettre l'accrochage que d'un type particulier de mandrin dont la géométrie est complémentaire de celle d'un manchon de sorte que chaque mandrin ne peut être accroché que sur le seul manchon de type correspondant.

L'expérience a de plus montré que le dispositif était utilisable pour les conduites où circulent des gaz à condensats. En effet, on sait que des accumulations de condensats tels que de l'eau apparaissent aux points les plus bas des canalisations augmentent les risques de corrosion en ces endroits des canalisations. Le dispositif selon l'invention maintenu dans ces zones d'accumulation favorise la dispersion sous forme de brouillard des liquides accumulés et diminue le risque de corrosion.

## Revendications

1. Procédé pour stabiliser l'écoulement d'un mélange diphasique gaz-liquide dans une conduite (1) et réduire ainsi, notamment la formation de bouchons de gaz dans cet écoulement, pendant que l'on introduit dans la conduite (1) au moins un organe (2, 2a—2n) adapté à fractionner l'écoulement diphasique en une pluralité d'écoulements séparés et à les recombiner en formant un écoulement sensiblement homogène en aval dudit organe (2, 2a—2n) caractérisé en ce qu'on déplace cet organe (2, 2a—2n) dans la conduite (1) jusqu'à l'emplacement de celle-ci pour lequel on observe la meilleure stabilisation possible de l'écoulement, et en ce qu'on l'immobilise audit emplacement.

2. Procédé selon la revendication 1, caractérisé en ce que l'on fixe l'organe (2a—2n) à l'extrémité d'une tige de manoeuvre (13) et en ce qu'on utilise la tige de manoeuvre pour déplacer et maintenir ensuite l'organe (2a—2n) à l'emplacement de l'écoulement du mélange diphasique pour lequel la stabilisation de l'écoulement est la meilleure.

3. Procédé selon la revendication 1, caractérisé en ce que l'on dispose à plusieurs emplacements déterminés de l'écoulement du fluide diphasique des manchons ayant des géométries internes différentes les unes des autres et en ce que l'on fixe l'organe (2, 2a—2n) à l'extrémité d'un mandrin adapté à s'accrocher uniquement sur celui des manchons situés dans la zone de l'écoulement où l'on désire immobiliser l'organe régulateur, ce mandrin ayant une géométrie complémentaire de celle du manchon.

4. Dispositif pour stabiliser l'écoulement d'un mélange diphasique gaz-liquide dans une conduite (1) et réduire ainsi, notamment la formation de bouchons de gaz dans cet écoulement, ce dispositif comportant au moins un organe (2, 2a—2n) adapté à fractionner l'écoulement diphasique en une pluralité d'écoulements séparés qui se recombinent en formant un écoulement sensiblement homogène en aval dudit organe (2, 2a—2n) caractérisé en ce que ledit organe (2, 2a—2n) est amovible à l'intérieur de la conduite (1) de la conduite choisi à l'avance.

## Patentansprüche

1. Verfahren zum Stabilisieren der Strömung eines diphasischen Gas-Flüssigkeitsgemisches in einer Leitung (1), um auf diese Weise insbesondere die Bildung von Gasstopfen in dieser Strömung zu vermeiden, während man in die Leitung (1) wenigstens ein Organ (2, 2a—2n) einführt, das so ausgebildet ist, daß es die diphasische Strömung in eine Vielzahl von getrennten Strömungen fraktioniert und sie rekombiniert, indem eine im wesetlichen homogene Strömung hinter diesem Organ (2, 2a—2n) gebildet wird, dadurch gekennzeichnet, daß man dieses Organ (2, 2a—2n) in der Leitung (1) bis zu einer Stelle hiervon verschiebt, an der man die bestmögliche Stabilisierung der Strömung beobachtet und daß man es an dieser Stelle festsetzt.

2. Verfahren nach Anspruch 1, dadurch gekennzeichnet, daß man das Organ (2a—2n) am Ende einer Betätigungsstange (13) befestigt und daß man die Betätigungsstange zur Verschiebung und anschließend zum Halten des Organs (2a—2n) am Ort der Strömung des diphasischen Gemisches verwendet, für den die Stabilisierung der Strömung die günstigste ist.

3. Verfahren nach Anspruch 1, dadurch gekennzeichnet, daß man an mehreren bestimmten Orten der diphasischen Fluidströmung Hülsen mit zueinander unterschiedlicher Innengeometrie anordnet und daß man das Organ (2, 2a—2n) am Ende eines Dorns befestigt, der so ausgebildet ist, daß er sich allein auf derjenigen der Hülsen festsetzt bzw. verhakt, die in der Strömungszone angeordnet sind, wo man das Steuerorgan unbeweglich zu machen wünscht, wobei dieser Dorn eine Geometrie komplementär zu der der Hülse aufweist.

4. Vorrichtung zum Stabilisieren der Strömung eines diphasischen Gas-Flüssigkeitsgemisches in einer Leitung (1) und somit insbesondere zur Bildung von Gasstopfen in dieser Strömung, wobei diese Vorrichtung wenigstens ein Organ (2, 2a—2n) umfaßt, das so ausgebildet ist, daß es die diphasische Strömung in eine Vielzahl gesonderter Strömungen fraktioniert, die sich unter Bildung einer im wesentlichen homogenen Strömung hinter diesem Organ (2, 2a—2n) rekombinieren, dadurch gekennzeichnet, daß dieses Organ (2, 2a—2n) im Innern der Leitung (1) herausziehbar angeordnet ist und Einrichtungen umfaßt, die seine Festsetzung bzw. Unbeweglichmachung an einer vorgewählten Stelle der Leitung ermöglichen.

## Claims

1. A process for stabilizing the flow of a two-phase gas-liquid mixture in a conduit (1) and thus in particular reducing the formation of gas locks in said flow, while introduced into the conduit (1) is at least one member (2, 2a—2n) which is adapted to divide the two-phase flow into a plurality of separate flows and re-combine them forming a substantially homogenous flow downstream of said member (2, 2a—2n), characterised in that said member (2, 2a—2n) is displaced in the conduit (1) to a location therein at which the best possible stabilization of the flow is observed, and that it is immobilized at said location.

2. A process according to claim 1 characterised in that the member (2a—2n) is fixed to the end of an operating rod (13) and that the operating rod is used to displace the member (2a—2n) and then maintain it at the location in the flow of the two-phase mixture, at which best stabilization of the flow is achieved.

3. A process according to claim 1 characterised in that sleeve members of different internal geometries from each other are disposed at a plurality of given locations in the flow of the two-phase fluid, and that the member (2, 2a—2n) is fixed to the end of a mandril which is adapted to engage only with that one of the sleeve members which are disposed in the region of the flow where the regulating member is to be immobilized, said mandril being of a geometry which is complementary to that of the sleeve member.

4. Apparatus for stabilizing the flow of a two-phase gas-liquid mixture in a conduit (1) and thus in particular reducing the formation of gas locks in said flow, said apparatus comprising at least one member (2, 2a—2n) which is adapted to divide the two-phase flow into a plurality of separate flows which are recombined, forming a substantially homogenous flow downstream of said member (2, 2a—2n), characterised in that member (2, 2a—2n) is movable within the conduit (1) and comprises means permitting it to be immobilized at a preselected location in the conduit.

**FIG.1**

**FIG.2**

2(n-2)
2(n-1)
2n

**FIG.3** **FIG.4** **FIG.5**

**FIG.6** **FIG.8**

**FIG.7**

**FIG.9**

**FIG.10**

9